# NEW EUROPEAN PATENT SPECIFICATION

(11) **EP 1 016 580 B2**
(45) Date of publication and mention of the opposition decision: **14.10.2015**
(45) Mention of the grant of the patent: 28.04.2010
(21) Application number: 99850217.3
(22) Date of filing: 27.12.1999
(51) Int. Cl.: B62B 3/06

(54) **Truck control**
Steuerung für einen Stapelwagen
Commande pour chariot élévateur

(30) Priority: 30.12.1998 SE 9804597
(43) Date of publication of application: 05.07.2000
(73) Proprietor: Toyota Material Handling Europe AB, 583 30 Linköping (SE)
(72) Inventor: Kurt-Ove Stenberg, 595 44 Mjölby (SE)
(74) Representative: Zacco Sweden AB

(56) References cited:
- EP-A- 0 398 393
- EP-A1- 0 319 630
- EP-A1- 0 881 468
- EP-A2- 0 398 393
- WO-A1-96/16316
- FR-A- 2 251 944
- GB-A- 2 228 835
- NL-A- 9 201 434
- US-A- 3 411 060
- US-A- 4 284 885
- US-A- 4 578 624
- US-A- 4 733 214
- US-A- 5 248 939
- US-A- 5 361 644

## Description

At trucks, for instance tiller trucks, today generally a more or less electronic drive or travel control is used to control travel direction and speed. The driving force is controlled by means of a potentiometer coupled to the control electronics. This brings the advantage of small control currents and good precision in the control. A drawback is however that potentiometers with necessity are worn reducing the precision and even bad contact may occur, resulting in a jerky increase or travel and the risk of dropping the load. To this comes of course the work with changing potentiometer including mounting and dismounting electrically as well as mechanically. There is also a risk that the potentiometer is subjected to moisture impairing its function and reducing it life, this in particular as many trucks of this kind alternatingly are indoors and outdoors with the consequent risk of condensation, not to mention the risk of rain.

US 5 361 644 discloses a control device for industrial trucks according to the preamble of claim 1 which comprises combination control grips which can both be rotated in the circumferential direction and deflected vertically, and on which control levers are arranged. The rotary and swinging deflecting movements are measured to form control signals.

In view of the above problems the object of the invention is to provide a drive control that do not have the above drawbacks. In accordance with the invention the problem is solved with a truck drive control according to claim 1. Initially this may seem as a step backward. Since with modern technique the switches or sensors can be made contact free and thereby wear free and uninfluenceable it is however a step forward and an essential difference relative the known technique.

Since the sensors are contact-free the mechanical manoeuvering part of the control can be contactwise or mechanically entirely free from the sensor part that therefor can be substituted without the mechanical maneuvering part having to be dismounted and vice versa.

Since the drive control also is to take care of the direction of travel this is at the invention simply solved by different series of sensors controlling travel forwards respectively backwards. This simple solution also minimizes the risk of errors.

An advantageous way to shape the drive control in accordance with the invention is to mount a magnet in the movable part of the control that at the turning or pushing movement of the control is brought past a number of Hall-elements that are used as sensors. By arranging a sufficient number of Hall-elements the control movement can be divided into the required number of steps that are required to make the adjustment of the speed sufficiently adaptable to the travel speed of the operator. If so is desired the number of sensors can be reduced or smaller steps be achieved by using both the front and rear slope of the sensor signals.

In relation to the normal use of potentiometers for the defining of the driving force at the invention a signal also at the 0-position can be obtained as a receipt if so desired.

If a stepless increase for the driving force is desired so that this will not be experienced as jerky this can surprisingly enough be achieved despite the use of discrete elements. The electronics can achieve a ramped or successive increase. By adapting the ramping to the speed between the sensors no delay is felt at rapid increases nor surprising increase jerks at slow movements. The ramping can also be used to bridge jerk free faulty separate sensors. When the position of the control change from a position it has had for a long time it can be difficult to know the speed of the control movement and then a standard value may be used instead, while when later an additional sensor is passed the electronics has the possibility to register the time and provide a suitable ramping based on the speed of the control movement.

An alternative, not part of the invention, to the use of Hall-elements is to use a light emitting diode that deliver light to a moveable light conductor or prism connected to the speed control, that leads the light further to a ladder of photodiodes or -transistors that are successively activated

The use of Hall-elements allows the mounting of these on a circuit card carrying the logic unit, and which printed circuit can be entirely and efficiently encapsulated. The drive controls are journaled directly in the handle or in a particular on this mountable control panel and includes a magnet for the activation of the Hall-sensors.

Since the manoeuvering parts are free from electrical components they will be easy to manufacture and service.

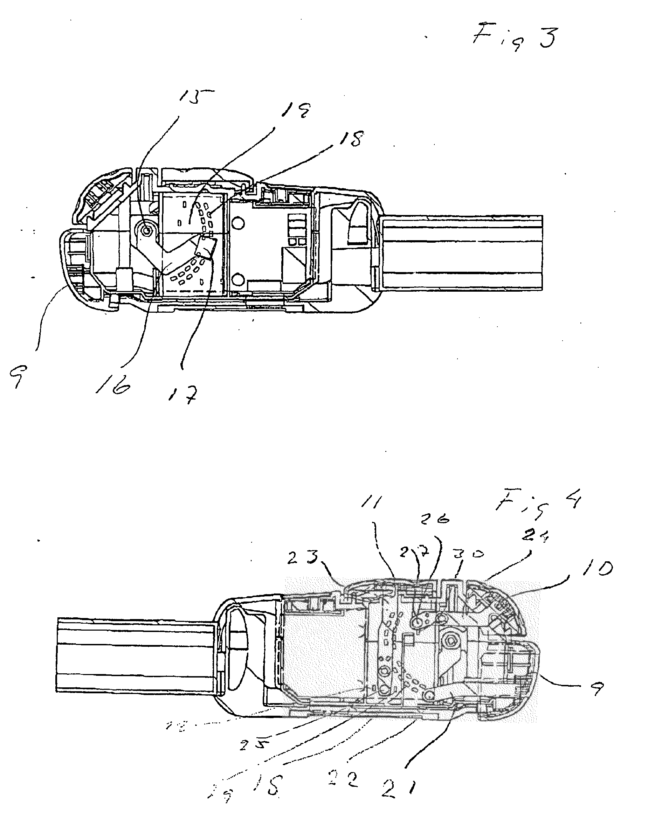

Additional advantages and characteristics of the invention are apparent from the following description of an embodiment shown in the enclosed drawings. In these fig. 1 shows a tiller truck in its entirety, fig 2 its handle seen from above, fig 3 and 4 vertical longitudinal sections through the handle and fig 5 one of the speed controls.

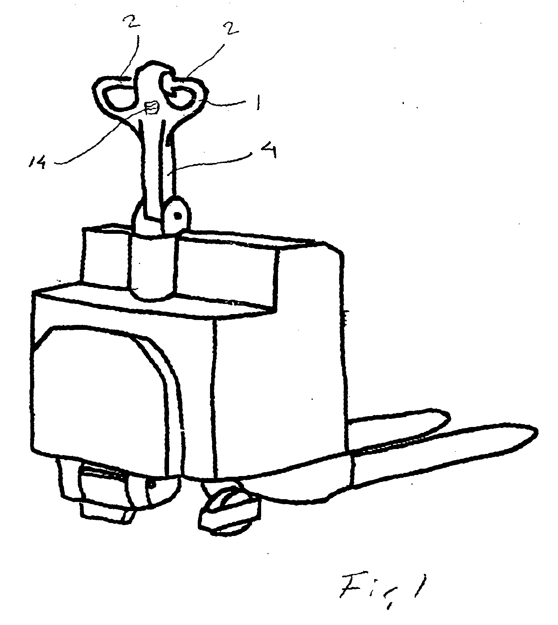

The tiller truck shown in fig 1 includes a drive and power unit from which the load forks project. In the drive and power unit the large batteries of the truck are arranged as well as a driving and steering wheel that is driven by a motor that is fed with electricity via a chopper that for instance provide currents in the shape of short pulses via tyristors. In the drive and power unit a hydraulic pump is provided with its electrically driven motor and hydraulic valves for the lifting movements. With the driving and steering wheel a tiller 4 is further connected, that is hinged height wise but pivotable together with the wheel in the drive and power unit for steering of the truck. In the outer end of the tiller a tiller handle is fastened and normally the operator leads the truck behind himself or steers it in front of himself.

The handle contains a supporting structure 1 provided with two grip handles 2 and is by means of bolts 3 fastened to the tiller 4 of the truck. On the frame 1 of the handle a control panel is fastened with four screws 6. The panel 5 is provided with drive controls 7 and 8 for left and right hand respectively for control of travel direction and speed by turning.

The control panel further includes a safety control or belly-button 9, a control 10 for lifting and lowering of the forks , a control 11 for lifting and lowering of the support legs and two buttons for the horn, one for the left and one for the right hand. On the top side the handle is further provided a display 13 and on the bottom side there is keyboard 14 for authority verification.

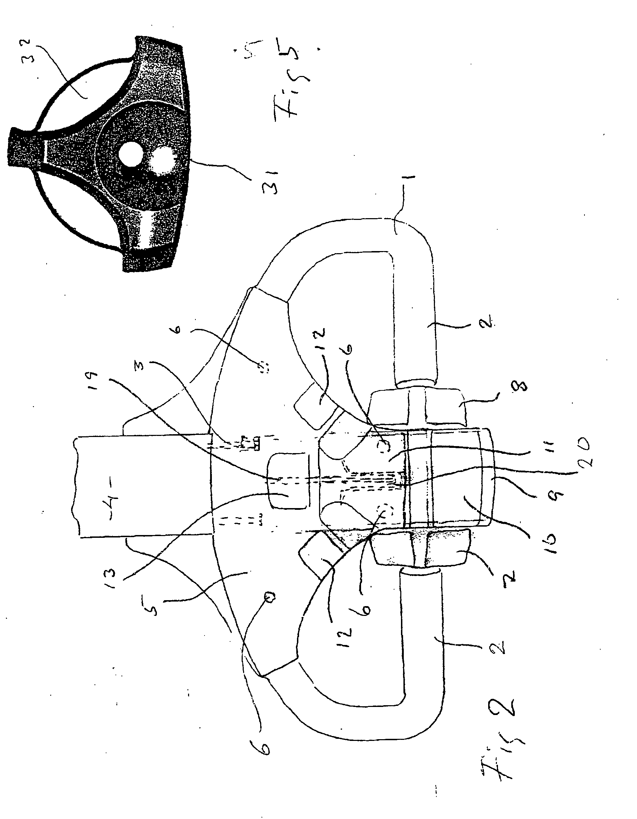

The drive controls 7 and 8 have the shape that is shown in fig 5 and differ from conventional drive controls by a downwards facing only slightly curved side 31. The operator can when he walks forwards with the truck following after him turn the palm of the hand upwards with the index finger in contact with the downwards facing only slightly curved side of the control, while the thumb may grip into the upper recess 32 turned towards the operator. In this way the ergonomics and the possibility of the operator to vary the manner in which the drive controls are actuated improve, so that the comfort is increased at the same time as the risk of wear damages is reduced.

The drive controls 8 and 7 for right and left hand respectively are connected to an axle 15 journaled in a lower bowl shaped part of the control panel 5. On the axle 15 an arm 16 is arranged provided with a magnet 17 in the outer end. At actuation of one of the drive controls 7 or 8 this magnet 17 is swung upwards or downwards from the neutral rest position dependent on desired direction of movement and speed respectively. The magnet that moves in a vertical plane at this sweeps along a curved double path of separate Hall sensors 18 arranged on a printed circuit 19. Via a serial cable 31 the printed circuit card is in contact with the drive and power unit of the truck. The printed circuit card is in the proximity of the speed control arranged in a narrow vertical receiving space or slot 20 in the bottom part of the housing and is in this way well protected, while the magnet moves on the outside of the slit wall, the magnet or any of the other moveable parts can thus not harm the Hall sensors or the printed circuit card even at greater play. The magnet field however has no difficulty in reaching through the walls of the receptacle and influence the Hall-elements. The Hall elements 18 serve as sensors or switches and the further forward (towards the truck) arranged logic is programmed so that it via the serial cable 31 and an electronically controlled chopper between battery and drive motor can control a successive increasing feed of more drive power at increased deflection of the drive control. The axle is further influenced by a spring device that when uninfluenced return the speed control to its 0-position. Since the Hall sensors 18 are arranged in double rows a large number of individual control levels are obtained (nine in each direction).

Through the used sensor technique the possibility is obtained to have many regulator steps at a low cost and it is easy to adapt the truck speed to the walking velocity of individual operators. In order to allow sufficient precision of the speed steps at low speed the steps are smaller at low speeds than those at the higher speeds. In order additionally to eliminate the feeling of jerkiness at the turning of the drive control the electronics is programmed to give a stepless increase, which is obtained by a successive and stepless increase to this value as the control is turned to the next step. By letting the rapidity in this successive and stepless increase be controlled by how swift the control movement is the sense of sluggishness that otherwise might be felt at increase is avoided. At a swift increase the ramping will be steep and no delay is felt and at a slow increase the ramping is slow so that the operator is not surprised by any sudden increase in velocity. This adaptive ramping may to its inclination be controlled by the time that passes between the activation of the different sensors at increase and decrease. Although this leads to a delay corresponding to the time between the reaction of these sensors this time is entirely negligible in relation to the slowness of the truck due to its weight.

As an alternative, not part of the invention, to the above use of Hall-elements for contact free control one can consider the use of photosensitive elements together with light guides or reflectors and light emitting diodes or some other light source.

The belly or security button has as its purpose to prevent the operator from being squeezed between the truck and a wall. Should this occur and the belly button is pushed in this is on an inwardly extending arm 21 provided with a magnet 22 that at this movement is moved so that it will influence one or several of the Hall elements that belong to the speed control, the magnet 22 however being located on the other side of the circuit card and its respective slot in relation to the magnet of the speed control. The magnet is as is apparent in level with the Hall-element that corresponds to the next fastest speed away from the operator, that is movement in the fork direction. The logic of the printed circuit card is at this programmed to activate an anti squeeze operation where the truck moves away from the operator until the button is released and has returned to its initial position.

The logic is further so programmed that if it detects a sensor fault that could mean that the sensor or sensors that are to react on a pushing of the belly-button might be non-functioning further use is blocked, or only allowed with limitations, as for instance that the truck can only be driven with a reduced speed and/or that the truck can not be driven towards the operator.

Also the controls located on top of the handle are provided with arms 23, 24 and magnets 25, 26 so that a tilting movement result in Hall-elements 27-30 being influenced initiating movements up and down for forks and support legs respectively.

For the above listed controls the use of Hall elements on the printed circuit card is particularly simple to arrange since the controls are located centrally in the handle in the same manner as the printed circuit card. If so desired one could consider also to arrange the signal controls with an extension and a magnet for a corresponding activation but in the shown case the signal controls are conventional electric contacts and connected by means of electric leads. Since the sensors belonging to the different movement controls are constituted by Hall elements sitting directly on the printed circuit card the possibility of electromagnetic pulses coming from the outside to interfere will become very small since the leads are short and centrally placed and also can be metal enclosed.

The slot or channel 20 receiving the printed circuit card 19 in the panel housing is narrow where the Hall sensors are situated to allow magnet influence for respective control but is widened in the end facing the truck. In this wider end the capsules containing the processors, memories etc are arranged, as well as the connections to the serial cable 31, keyboard and display.

The display 13 arranged on top of the control panel 5 is connected to the printed circuit card 19. The display is used at malfunction control and parameter setting without external means or additionally on the truck arranged means, but solely with the controls that the truck is normally provided with. In order to conduct an error control or parameter setting respectively one of the signal buttons is depressed at the same time as the truck is turned on via the authority verification described in more detail below alternatively with a key. This result in the logic of the truck entering into what we could call a check mode with all working functions inactive. An E is shown on the display corresponding to an Error log mode. A continued depressing result in the display of a P corresponding to parameter setting mode and a releasing of the signal button causes it to stay in the shown mode.

In the E-mode after a releasing of the signal button the latest error or malfunction that has been registered is displayed in the form of an error code alternating with the time (drive time) at which the error occurred. By means of the speed control one can then move back and forward in time with error codes and corresponding times being displayed. To get out of the error log mode the truck is turned off.

If by a somewhat longer depression of the signal button a P is shown on the display and the button is released at this the parameter setting mode has been entered and by actuation of the drive control corresponding to movement from or against the operator the display moves up or down in the list of parameters. When the parameter that is to be altered has been reached in this way the signal button is depressed resulting in the display of the parameter value, which can be altered up or down by means of the drive control. When the desired value has been reached this is confirmed by a depressing of the signal button, whereafter with the drive control the next parameter that is to be changed can be chosen. In order to exit the parameter setting mode the truck is turned off.

Examples of parameters etc that may be adjusted are allowed acceleration and retardation, height and load limitations, what one wants to receive warnings about, as battery voltage, load weight, height indication, if the indication is to be in kilograms, pounds, meters, feet etc.

The shift back from the error mode or parameter setting mode to drive mode is by turning the machine off. By not depressing any of the signal buttons at the starting the machine starts in drive mode with the possibly new parameter settings.

As is realized a possible change of the number of modes includes only changes in the electronics and a possible increase in the number of modes and check possibilities can thus be achieved with small costs, whether it is a question of further developments in production or refurnishing of a truck.

On the bottom side of the handle a keyboard is arranged for authority verification and starting and turning off of the truck instead of by means of a key. The keyboard is connected to the printed circuit card and arranged on the bottom of the housing of the control panel bottom part. The chassis of the handle is here provided with a corresponding recess so that the keys can be actuated. In this way the keyboard will at the same time be recessed and well protected by the sturdy chassis. The key board includes figure keys and a green key for start and a red key for stopping. If one wishes to enter Error log Mode, parameter setting mode or some other mode where the truck is inactivated one of the signal buttons is depressed at the same time as the green button is depressed or after entered authority verification code. The signal buttons are easy to reach even with the handle turned upward since they are located on the side of the control panel.

The keys of the keyboard may be provided with light emitting diodes that are lit when they have been depressed so that a receipt is obtained for the depressing, alternatively a row of light emitting diodes may be used as confirmation. The keys may be so called touch-keys or membrane keys.

The invention is not limited to the above embodiment but may be varied within the frame of the following claims.

## Claims

1. Truck drive control (7, 8), where several power steps are desired, arranged to provide varying drive current to a drive motor, **characterized in that** it comprises:
- a number of discrete contact free Hall elements used as sensors
- a magnet (17) of the drive control mounted in the mechanical maneuvering part of the control and arranged to successively activate said sensors after each other
- and a control circuit for providing a varying drive current to the drive motor based on the activated sensors.

2. Truck drive control (7, 8) according to claim 1, wherein different series of sensors control travel forward and travel backwards, respectively, for minimizing risk of errors.

3. Truck drive control (7, 8) according to any of the claims 1 - 2, wherein a signal at the 0 - position is obtained.

4. Truck drive control (7, 8) according to any of the claims 1 - 3, wherein said sensors are arranged along a curved double path on a printed circuit card (19), that also includes a logic unit wherein the drive control (7, 8) is connected to a journalled axle (15), and wherein on said axle an arm (16) is arranged provided with said magnet (17) of the drive control on the outer end wherein at actuation of the drive control this magnet is swung upwards or downwards from the neutral rest position dependent on the desired direction of movement and speed respectively, wherein said sensors (18) are arranged in double rows so that a large number of individual control levels are obtained.

5. Truck drive control (7, 8) according to any of the claims 1 - 4, wherein smaller power steps are obtained by using the front and rear slope of the sensor signals.

6. Truck drive control (7, 8) according to any of the claims above, further comprising a so called belly button or safety control (9) including means for activating one or several of the contact free sensors (18) belonging to the drive control (7, 8) so that the same sensors can be used also for this function.

7. Truck drive control (7, 8) according to claim 6, wherein the safety control is provided with a magnet (22) on an inwardly extending arm (21) that at this movement is moved so that it will activate one or several of the Hall elements that belong to the drive control (7, 8), wherein the magnet (22) of the safety control is located on the other side of the circuit card (19), in relation to the magnet (17) of the drive control (7, 8).

8. Truck drive control (7, 8) according to any of the claims above wherein, said control is arranged to use ramping by the control circuit of said control, for bridging, jerk free, a faulty separate sensor.

9. Truck drive control (7, 8) according to any of the preceding claims, **characterized in that** a sensor element (18) corresponding to a movement towards the operator, and a sensor element (18) corresponding to movement away from the operator via a logic unit are used for a stepping forward or rearward at parameter setting.

10. Truck drive control (7, 8) according to any of the preceding claims, **characterized in that** it is adapted or programmed to achieve a stepless transition or ramping between different sensors corresponding to power steps, at which the time for the change between the different power steps corresponds to or is proportional to the time between the different sensor positions, so that a rapid control movement results in a rapid ramping while a slow movement results in a slower ramping.

11. Truck drive control (7, 8) according to any of the claims above, wherein said control is a tiller truck drive control.

12. Tiller truck comprising the truck drive control (7, 8) according to any of the claims 1 - 11.

## Patentansprüche

1. Transporterantriebssteuerung (7, 8), wo mehrere Energieschritte gewünscht werden, die einen variierenden Antriebsstrom am Antriebsmotor bereitstellen kann, **dadurch gekennzeichnet, dass** sie umfasst:
eine Anzahl von diskreten, kontaktlosen Hall-Elementen, die als Sensoren verwendet werden,
einen Magnet (17) der Antriebsteuerung, der in dem mechanischen Manövrierteil der Steuerung befestigt ist und die Sensoren sukzessive nacheinander aktivieren kann, und
einen Steuerungskreis zum Bereitstellen eines variierenden Antriebsstroms am Antriebsmotor basierend auf den aktivierten Sensoren.

2. Transporterantriebssteuerung (7, 8) gemäß Anspruch 1, bei der unterschiedliche Serien von Sensoren eine Bewegung nach vorne und eine Bewegung nach hinten entsprechend steuern, um ein Fehlerrisiko zu minimieren.

3. Transporterantriebssteuerung (7, 8) gemäß einem der Ansprüche 1-2, bei der ein Signal an der 0-Position erhalten wird.

4. Transporterantriebssteuerung (7, 8) gemäß einem der Ansprüche 1-3, bei der die Sensoren entlang eines gekrümmten Doppelpfades an einem bedruckten Kreis (19) angeordnet sind, der ebenso eine Logikeinheit aufweist, wobei die Antriebssteuerungen (7, 8) mit einer Wellenachse (15) verbunden ist, und wobei an der Achse ein Arm (16) vorgesehen ist, der mit dem Magnet (17) der Antriebssteuerung am Außenende versehen ist, wobei bei einer Betätigung der Antriebssteuerung dieser Magnet nach oben oder nach unten von einer neutralen Ruheposition in Abhängigkeit von entsprechend der gewünschten Richtung der Bewegung und Geschwindigkeit geschwungen wird, wobei
die Sensoren (18) in Doppelreihen derart angeordnet sind, dass eine große Anzahl von individuellen Steuerebenen erhalten wird.

5. Transporterantriebssteuerung (7, 8) gemäß einem der Ansprüche 1-5, bei der kleinere Energieschritte erhalten werden, indem die Vorder- und Rückneigung der Sensorsignale verwendet wird.

6. Transporterantriebssteuerung (7, 8) gemäß einem der obigen Ansprüche, weiter umfassend einen sogenannten Bauchknopf oder eine sogenannte Sicherheitssteuerung (9), die ein Mittel zum Aktivieren eines oder mehrerer der zur Antriebssteuerung (7, 8) gehörigen kontaktlosen Sensoren (18) aufweist, so dass die gleichen Sensoren ebenso für diese Funktion verwendet werden können.

7. Transporterantriebssteuerung (7, 8) gemäß Anspruch 6, bei der die Sicherheitssteuerung mit einem Magnet (22) an einem sich nach innen erstreckenden Arm (21) versehen ist, der bei dieser Bewegung derart bewegt wird, dass er ein oder mehrere der zur Antriebssteuerung (7, 8) gehörigen Hall-Elemente betätigt, wobei der Magnet (22) der Sicherheitssteuerung an der anderen Seite der Kreiskarte (19) in Relation zum Magneten (17) der Antriebssteuerung (7, 8) gelegen ist.

8. Transporterantriebssteuerung (7, 8) gemäß einem der obigen Ansprüche, bei der die Steuerung ein Beschleunigen durch den Steuerungskreis der Steuerung verwenden kann, um einen fehlerhaften separaten Sensor ruckfrei zu überbrücken.

9. Transporterantriebssteuerung (7, 8) gemäß einem der vorangegangenen Ansprüche, **dadurch gekennzeichnet, dass** ein einer Bewegung in Richtung des Bedieners entsprechendes Sensorelement (18) und ein einer Bewegung weg vom Bediener über eine Logikeinheit entsprechendes Sensorelement (18) verwendet werden, um bei einer Parameterfestlegung vor- oder zurückzugehen.

10. Transporterantriebssteuerung (7, 8) gemäß einem der vorangegangenen Ansprüche, **dadurch gekennzeichnet, dass** sie eingerichtet oder programmiert ist, eine stufenlose Übertragung oder Beschleunigung zwischen verschiedenen Sensoren, die Energieschritten entsprechen, zu erreichen wobei die Zeit zur Veränderung zwischen den verschiedenen Energieschritten der Zeit zwischen den verschiedenen Sensorpositionen entspricht oder hierzu proportional ist, so dass eine schnelle Steuerbewegung zu einer schnellen Beschleunigung führt, während eine langsame Bewegung zu einer langsameren Beschleunigung führt.

11. Transporterantriebssteuerung (7, 8) gemäß einem der obigen Ansprüche, bei der die Steuerung eine Deichselflurförderzeugantriebssteuerung ist.

12. Deichselflurförderzeug umfassend die Transporterantriebssteuerung (7, 8) gemäß einem der Ansprüche 1-11.

## Revendications

1. Commande d'entraînement d'un chariot (7, 8), où plusieurs paliers de puissance sont souhaités, agencée de façon à fournir un courant d'entraînement variable à un moteur d'entraînement, **caractérisée en ce qu'**elle comprend :
- un certain nombre d'éléments discrets à effet Hall sans contact utilisés en tant que détecteurs ;
- un aimant (17) de la commande d'entraînement monté dans la partie manoeuvre mécanique de la commande, et agencé de façon à activer de manière successive lesdits détecteurs les uns après les autres ;
- et un circuit de commande destiné à fournir un courant d'entraînement variable au moteur d'entraînement sur la base des détecteurs activés.

2. Commande d'entraînement d'un chariot (7, 8) selon la revendication 1, dans laquelle différentes séries de détecteurs commandent un déplacement vers l'avant et un déplacement vers l'arrière, respectivement, de façon à réduire au minimum le risque d'erreurs.

3. Commande d'entraînement d'un chariot (7, 8) selon la revendication 1 ou la revendication 2, dans laquelle un signal à la position 0 est obtenu.

4. Commande d'entraînement d'un chariot (7, 8) selon l'une quelconque des revendications 1 à 3, dans laquelle lesdits détecteurs sont agencés le long d'un chemin double incurvé sur une carte de circuit imprimé (19), qui comprend également une unité logique dans laquelle la commande d'entraînement (7, 8) est connectée à un essieu tourillonné (15), et dans laquelle, sur ledit essieu, est agencé un bras (16) doté dudit aimant (17) de la commande d'entraînement sur l'extrémité extérieure, dans laquelle, lors de l'actionnement de la commande d'entraînement, cet aimant bascule vers le haut ou vers le bas à partir de la position de repos neutre selon la direction de déplacement et la vitesse souhaitées, respectivement, dans laquelle lesdits détecteurs (18) sont disposés selon des rangées doubles de telle sorte qu'il soit possible d'obtenir un grand nombre de niveaux de commande individuels.

5. Commande d'entraînement d'un chariot (7, 8) selon l'une quelconque des revendications 1 à 4, dans laquelle de plus petits paliers de puissance sont obtenus en utilisant la pente avant et la pente arrière des signaux des détecteurs.

6. Commande d'entraînement d'un chariot (7, 8) selon l'une quelconque des revendications précédentes, comprenant en outre ce qu'il est convenu d'appeler un bouton bombé ou une commande de sécurité (9) qui comprend des moyens destinés à activer un ou plusieurs des détecteurs sans contact (18) qui appartiennent à la commande d'entraînement (7, 8) de telle sorte que ces mêmes détecteurs puissent également être utilisés pour cette fonction.

7. Commande d'entraînement d'un chariot (7, 8) selon la revendication 6, dans laquelle la commande de sécurité est dotée d'un d'aimant (22) sur un bras qui s'étend vers l'intérieur (21) qui, lors de son déplacement, est déplacé de façon à activer un ou plusieurs des éléments à effet Hall qui appartiennent à la commande d'entraînement (7, 8), dans laquelle l'aimant (22) de la commande de sécurité se situe de l'autre côté de la carte de circuit imprimé (19), par rapport à l'aimant (17) de la commande d'entraînement (7, 8).

8. Commande d'entraînement d'un chariot (7, 8) selon l'une quelconque des revendications précédentes, dans laquelle ladite commande est agencée de façon à utiliser une transition en rampe par le circuit de commande de ladite commande, de façon à court-circuiter, sans saccade, un détecteur séparé défectueux.

9. Commande d'entraînement d'un chariot (7, 8) selon l'une quelconque des revendications précédentes, **caractérisée en ce qu'**un élément de détection (18) qui correspond à un déplacement en allant vers le conducteur, et qu'un élément de détection (18) qui correspond à un déplacement en s'éloignant du conducteur sont utilisés, par l'intermédiaire d'une unité logique, pour une transition en palier vers l'avant ou vers l'arrière selon le réglage d'un paramètre.

10. Commande d'entraînement d'un chariot (7, 8) selon l'une quelconque des revendications précédentes, **caractérisée en ce qu'**elle est adaptée ou programmée de façon à réaliser une transition sans palier ou en rampe entre différents détecteurs qui correspondent à des paliers de puissance, où le moment d'un changement entre les différents paliers de puissance correspond, ou est proportionnel, au temps qui s'écoule entre les différentes positions des détecteurs, de telle sorte qu'un déplacement de commande rapide se traduise par une transition en rampe rapide, et qu'un déplacement lent se traduise par une transition en rampe plus lente.

11. Commande d'entraînement d'un chariot (7, 8) selon l'une quelconque des revendications précédentes, dans laquelle ladite commande est une commande d'entraînement d'un chariot à timon.

12. Chariot à timon comprenant la commande d'entraînement d'un chariot (7, 8) selon l'une quelconque des revendications 1 à 11.
